# FASCICULE DE BREVET EUROPEEN

(11) **EP 0 574 438 B1**
(45) Date de publication et mention de la délivrance du brevet: **02.11.1994**
(21) Numéro de dépôt: 92905389.0
(22) Date de dépôt: 25.02.1992
(51) Int. Cl.: C01B 15/029, B01J 27/185, B01J 23/44

(54) **SYNTHESE DIRECTE DE PEROXYDE D'HYDROGENE PAR CATALYSE HETEROGENE, CATALYSEUR POUR LADITE SYNTHESE ET PROCEDE DE PREPARATION DUDIT CATALYSEUR**
DIREKTSYNTHESE VON WASSERSTOFFPEROXID DURCH HETEROGENE KATALYSE, KATALYSATOR FUER DIESE SYNTHESE UND VERFAHREN ZUR HERSTELLUNG DIESER KATALYSATOR
DIRECT SYNTHESIS OF HYDROGEN PEROXYDE BY HETEROGENEOUS CATALYSIS, CATALYST FOR SAID SYNTHESIS, AND METHOD OF PREPARATION OF SAID CATALYST

(30) Priorité: 05.03.1991 BE 9100205
(43) Date de publication de la demande: 22.12.1993
(73) Titulaire: SOLVAY INTEROX, B-1050 Bruxelles (BE)
(72) Inventeur: VAN WEYNBERGH, Jacques, B-1020 Bruxelles (BE); SCHOEBRECHTS, Jean-Paul, B-1390 Grez-Doiceau (BE); COLERY, Jean-Claude, B-1325 Chaumont-Gistoux (BE)
(74) Mandataire: Decamps, Alain René François
(86) Numéro de dépôt international: EP9200404
(87) Numéro de publication internationale: WO9215520

(56) Documents cités:
- EP-A- 0 049 810
- EP-A- 0 342 048
- FR-A- 2 301 506
- GB-A- 1 056 125
- US-A- 4 661 337

## Description

La présente invention concerne un procédé pour la synthèse directe du peroxyde d'hydrogène à partir d'hydrogène et d'oxygène. Elle s'adresse plus particulièrement à un procédé pour la synthèse de peroxyde d'hydrogène par catalyse hétérogène.

Elle concerne aussi un catalyseur pour ledit procédé ainsi qu'un procédé pour la fabrication de ce catalyseur.

Il est connu par la demande de brevet EP-A2-0274830 (du PONT de NEMOURS) de synthétiser du peroxyde d'hydrogène par réaction directe d'hydrogène avec de l'oxygène en présence d'un catalyseur solide métallique choisi parmi le palladium, le platine ou une combinaison de ces deux métaux dans un milieu réactionnel aqueux acide contenant un bromure à titre de promoteur ou d'inhibiteur de décomposition du peroxyde formé. Le métal du catalyseur peut être supporté sur un support approprié choisi parmi le carbone, la silice, l'alumine ou les résines échangeuses d'ions.

Dans la demande de brevet EP-A2-0342047 (du PONT de NEMOURS), il est en outre divulgué qu'il est avantageux que les concentrations en acide et en ions bromure soient comprises, de manière indépendante l'une de l'autre, dans la zone 0,001 M à 0,05 M.

On a aussi divulgué dans le brevet US-4832938 (du PONT de NEMOURS) que le rapport pondéral Pt / (Pt + Pd) devait, de préférence, être compris dans la plage allant de 0,02 à 0,2.

Dans tous ces procédés connus, la sélectivité de la réaction par rapport aux réactifs et, en particulier, par rapport à l'hydrogène mis en oeuvre, n'est pas très élevée et se si tue généralement entre 50 et 70 % en moles. Dans le meilleur des cas, elle ne dépasse jamais 77 % en moles. Or, en ce qui concerne l'économie du procédé, le coût de l'hydrogène entre pour une partie importante dans le prix de revient du peroxyde d'hydrogène produit. Par ailleurs, il n'est pas rare que le support du catalyseur se dissolve partiellement dans le milieu réactionnel acide.

La présente invention a pour objet un procédé de synthèse directe de peroxyde d'hydrogène à partir d'hydrogène et d'oxygène qui ne présente pas les désavantages des procédés connus.

A cet effet, l'invention concerne un procédé pour la synthèse directe d'une solution aqueuse de peroxyde d'hydrogène à partir d'hydrogène et d'oxygène par catalyse hétérogène dans un système triphasique selon lequel on fait réagir directement l'hydrogène et l'oxygène à l'état gazeux sous une pression supérieure à la pression atmosphérique à la surface d'un catalyseur hétérogène solide mis en suspension à l'état de granules dans une phase aqueuse liquide, le catalyseur étant constitué d'un composé métallique choisi parmi le palladium pur ou une association de palladium avec au moins un autre métal noble et le composé métallique étant imprégné sur un support comprenant au moins un composé choisi parmi les sulfates de métaux alcalino-terreux.

Par synthèse directe d'une solution aqueuse de peroxyde d'hydrogène, on entend désigner la synthèse de solutions d'H₂O₂ dans l'eau à partir de ses éléments, à savoir l'oxygène et l'hydrogène. Selon l'invention, ces deux réactifs sont mis en oeuvre dans des conditions de température et de pression réglées pour qu'ils se présentent à l'état gazeux, la pression étant toutefois choisie supérieure à la pression atmosphérique.

Le catalyseur conforme au procédé selon l'invention appartient à la classe des catalyseurs solides utilisés en catalyse hétérogène, c'est-à-dire une catalyse qui s'exerce à l'interface entre le solide catalytique et une ou plusieurs autres phases contenant les réactifs. Selon l'invention, le catalyseur solide est maintenu en suspension sous forme de granules dans une phase aqueuse liquide capable de recueillir et de solubiliser le peroxyde d'hydrogène formé. Les deux réactifs gazeux, oxygène et hydrogène, sont mis en contact avec le catalyseur en suspension dans la solution. Le catalyseur est par ailleurs constitué de palladium pur ou, de manière alternative et non préférée, d'une association de palladium avec un autre métal noble. Le palladium ou l'association de palladium est en outre imprégné sur un support constitué d'un sulfate d'un métal alcalino-terreux. Par palladium pur, on entend désigner un métal titrant plus de 99,90 % en poids de palladium.

Lorsque le catalyseur est constitué d'une association de palladium avec un autre métal noble, il convient que l'autre métal noble soit réparti de façon homogène dans la masse du palladium. La répartition homogène de l'autre métal noble peut être réalisée à l'échelle atomique, par exemple lorsque l'association se présente sous la forme d'un alliage homogène. La répartition de l'autre métal noble peut aussi être réalisée à une échelle plus macroscopique comme, par exemple, la dispersion de petits agglomérats de l'autre métal noble dans le palladium, ou encore la formation d'une fine couche d'enrobant de l'autre métal noble autour des grains de palladium. L'autre métal noble sera de préférence choisi parmi le platine, le rhodium et l'or. Il peut aussi consister en un mélange de ces métaux. Parmi ces métaux nobles, l'or est particulièrement préféré. La proportion en poids de l'autre métal noble dans l'association peut varier dans de larges limites. Il est avantageux qu'elle n'excède pas 80 % du poids total des métaux du catalyseur et, de préférence, 60 % du poids total de ces métaux.

Le support du catalyseur comprend, selon l'invention, au moins un composé choisi parmi les sulfates des métaux alcalino-terreux. Par sulfate on entend désigner un sel de métal alcalino-terreux qui contient le groupe sulfate neutre (SO₄⁻⁻), monohydrogénosulfate ou sulfate acide (HSO₄⁻). Tous les métaux alcalino-terreux conviennent pour autant que leur sulfate soit insoluble en solution aqueuse et, de préférence, en solution aqueuse acide, notamment dans les solutions de pH compris entre 0 et 4. Il est avantageux que le métal alcalino-terreux soit choisi parmi le magnésium, le calcium, le strontium et le baryum. Le sulfate neutre de baryum (BaSO₄) est particulièrement préféré en raison de sa faible solubilité en solution aqueuse et en solution aqueuse acide. Le catalyseur de palladium pur imprégné sur un support de sulfate de baryum a donné d'excellents résultats.

Dans une variante au procédé de l'invention, qui est préférée, on diminue encore la solubilité du BaSO₄ jusqu'à une valeur très faible en introduisant dans le milieu réactionnel une petite quantité d'ions SO4⁻⁻ comprise entre 0,001 et 0,2 mole par litre.

La proportion pondérale de palladium ou d'association de palladium avec un autre métal noble par rapport au support doit, dans le catalyseur conforme au procédé selon l'invention, se situer dans la gamme comprise entre 0,1 et 15 g de métaux nobles pour 100 g du poids total de métaux nobles et de support. De préférence, cette proportion se situera dans la gamme comprise entre 0,2 et 10 g de métal noble pour 100 g du poids total de catalyseur.

La granulométrie que présente le catalyseur exerce une influence sur les performances obtenues. Une diminution de la taille des granules de catalyseur a pour résultat l'augmentation de l'efficacité de celui-ci, c'est-à-dire la réduction de l'importance des phénomènes de diffusion intraparticulaire ainsi qu'une augmentation du taux de conversion des réactifs et une diminution de la sélectivité.

Le choix de la taille des particules de catalyseur sera donc le résultat d'une optimisation : cette taille devra être suffisamment petite pour assurer une bonne efficacité et une bonne conversion des réactifs mais ne pourra cependant devenir trop faible sous peine de donner lieu à des difficultés de filtration. En pratique, on sélectionnera des granules de catalyseur qui présentent un diamètre moyen dans la plage comprise entre 0,5 et 500 µm et, de préférence, entre 10 et 100 µm. Par ailleurs, le volume poreux de ces granules de catalyseur doit être suffisamment élevé pour assurer une surface de contact solide - gaz élevée. Généralement, il convient de choisir des catalyseurs dont le volume poreux des granules est compris entre 0,01 et 1,5 cm³/g et, de préférence, entre 0,1 et 1,2 cm³/g.

La quantité optimale de catalyseur à mettre en oeuvre sera celle qui correspond à la limite entre la zone de contrôle cinétique de la réaction et la zone de contrôle diffusionnel. En pratique, cette limite correspond généralement à une quantité de palladium ou d'association de palladium avec un autre métal noble comprise entre 50 et 150 mg Pd/l de phase liquide et, de préférence entre 75 et 110 mg Pd/l.

Outre leurs propriétés catalytiques pour la réaction de synthèse directe du peroxyde d'hydrogène, les catalyseurs au palladium sont malheureusement aussi des catalyseurs de décomposition du peroxyde formé. Il est dès lors avantageux que la phase liquide contienne un composé capable d'empoisonner les sites de décomposition du peroxyde d'hydrogène présents à la surface du catalyseur. Les ions halogénures sont de bons représentants de ces composés. Leur concentration optimale doit être déterminée au moyen d'essais de laboratoire à la portée de l'homme du métier. Cette concentration doit être suffisante pour parvenir à empoisonner la majorité des sites de décomposition du catalyseur et, dans le même temps, pas trop élevée de façon à éviter autant que faire se peut la réaction d'oxydation de l'ion halogénure par le peroxyde d'hydrogène. Les ions chlorure, bromure et iodure conviennent pour inhiber les sites de décomposition du catalyseur. L'ion bromure a donné les meilleurs résultats en concentration comprise entre 0,05 et 3 mmoles/l de phase liquide et, de préférence, entre 0,1 et 2 mmoles/l.

Il est avantageux que la phase liquide contienne en outre un acide dans le but d'inhiber la décomposition spontanée non catalytique du peroxyde d'hydrogène, notamment celle qui s'effectue selon l'équation :

HO₂⁻ + H₂O₂ → H₂O + O₂ + OH⁻

Toutefois, lorsque cette concentration est trop élevée, la solubilité des gaz dans la phase liquide diminue et l'acide peut réagir avec le peroxyde d'hydrogène présent. Comme acides qui conviennent bien, on peut citer l'acide sulfurique et l'acide orthophosphorique. L'acide orthophosphorique est préféré. Le pH de la phase liquide se situe en général entre 0 et 4 et, de préférence, entre 0,5 et 1,5.

La température de la réaction est habituellement choisie à une valeur comprise entre 5 et 90°C et, de préférence entre 10 et 60°C.

La pression est choisie supérieure à la pression atmosphérique et est généralement comprise entre 50 et 200 bars et, de préférence entre 65 et 100 bars.

L'invention concerne aussi un catalyseur solide pour la production d'une phase aqueuse liquide de peroxyde d'hydrogène par catalyse hétérogène de la réaction de synthèse directe à partir d'hydrogène et d'oxygène gazeux dans un système triphasique. Selon l'invention, le catalyseur est constitué d'un composé métallique choisi parmi le palladium pur ou une association de palladium avec au moins un autre métal noble, le composé métallique étant imprégné sur un support comprenant au moins un composé choisi parmi les sulfates de métaux alcalino-terreux.

Les termes palladium pur, association de palladium avec un autre métal noble, sulfate d'un métal alcalino-terreux ont la même signification que celle qui a été explicitée ci-dessus dans la description du procédé de synthèse selon l'invention.

L'invention concerne enfin un procédé de fabrication d'un catalyseur solide pour la production d'une phase aqueuse liquide de peroxyde d'hydrogène par catalyse hétérogène selon lequel, dans une première étape, on dissout un sel soluble de palladium, ou un mélange de sel de palladium avec au moins un sel d'un autre métal noble, dans une solution aqueuse acide, dans une deuxième étape, on ajoute à la solution aqueuse des granules d'un support inorganique insoluble comprenant au moins un composé choisi parmi les sulfates de métaux alcalino-terreux et on précipite le palladium ou l'association de palladium avec au moins un autre métal noble par l'addition goutte à goutte d'une solution aqueuse d'une base forte, de préférence une solution aqueuse d'hydroxyde de sodium sous forte agitation jusqu'à ce que le pH du milieu soit compris entre 9 et 10, dans une troisième étape, on filtre ensuite le précipité et on lave à l'eau déminéralisée pour éliminer du précipité les ions solubles, dans une quatrième étape, on sèche le précipité puis on l'active dans un four maintenu à température comprise entre 130 et 300°C sous courant gazeux d'hydrogène mélangé à de l'azote et, dans une cinquième étape, on fait refroidir le catalyseur sous courant d'azote avant de le conserver en flacon scellé sous atmosphère d'azote.

De manière préférée, l'opération de précipitation du palladium ou de l'association de palladium avec au moins un autre métal noble peut se faire à une température proche ou égale à celle de l'ébullition de la solution sous pression atmosphérique. Cette façon de travailler permet de précipiter les métaux nobles sur le support avec des rendements quantitatifs.

Les exemples suivants sont donnés pour illustrer l'invention, sans pour autant en limiter la portée. Les exemples 1R à 5R sont donnés à titre de comparaison et ne sont pas conformes à l'invention. Les exemples 6 à 10 ont été réalisés conformément à l'invention.

### 1. Exemples 1R à 5R : (non conformes à l'invention)

Dans un tube à essai en verre on a pesé 60 mg de catalyseur et on a ajouté 40 ml d'une solution aqueuse contenant H₃PO₄ 1,6 M et NaBr 0,0006 M. On a ensuite procédé à la pesée du tube contenant la solution.

Le tube à essai a été introduit dans un autoclave thermostatisé muni d'un agitateur, d'un thermocouple et d'un tube d'alimentation en gaz en polytétrafluoréthylène qui plongent tous les trois dans la solution réactionnelle contenue dans le tube à essai.

Après fermeture de l'autoclave, on a admis de l'hydrogène et de l'oxygène en mélange dans l'autoclave de telle sorte que le mélange contenait 4,5 % en moles d'hydrogène (soit un rapport molaire O₂/H₂ de 21). Les deux gaz ont été prémélangés dans des débitmètres massiques.

La pression de la réaction a été maintenue à 80 bars au moyen d'une vanne de régulation placée en aval de l'autoclave. Le débit du mélange gazeux a été fixé à 100 l/h dans les conditions normales, la vitesse d'agitation à 1200 tours par minute et la durée de l'essai à 120 minutes.

A la fin de l'essai, on a titré le peroxyde d'hydrogène par iodométrie et on a calculé la sélectivité de la réaction par rapport à l'hydrogène mis en oeuvre sur base du gain en poids de la solution.

La sélectivité par rapport à l'hydrogène mis en oeuvre est définie comme étant le nombre de moles de H₂O₂ formées par rapport au nombre de moles d'hydrogène consommées.

### Exemple 1R :

Catalyseur : Pd sur carbone (5 % Pd) de marque ALDRICH
Température : 25°C
Concentration pondérale en H₂O₂ en fin d'essai : 2,0 %
Sélectivité par rapport à l'hydrogène : 71 %

### Exemple 2R :

Catalyseur : Pd sur carbone (5 % Pd) de marque JOHNSON MATTHEY
Température : 25°C
Concentration pondérale en H₂O₂ en fin d'essai : 2,88 %
Sélectivité par rapport à l'hydrogène : 70 %

### Exemple 3R :

Catalyseur : Pd sur Al₂O₃ (5 % Pd) de marque JOHNSON MATTHEY
Température : 25°C
Concentration pondérale en H₂O₂ en fin d'essai : 4,1 %
Sélectivité par rapport à l'hydrogène : 73 %

### Exemple 4R :

Catalyseur : Pd sur Al₂O₃ (5 % Pd) de marque ALDRICH
Température : 25°C
Concentration pondérale en H₂O₂ en fin d'essai : 7,6 %
Sélectivité par rapport à l'hydrogène : 70 %

### Exemple 5R :

Catalyseur : Pd sur SiO₂/Al₂O₃ (5 % Pd)
Température : 25°C
Concentration pondérale en H₂O₂ en fin d'essai : 2,46 %
Sélectivité par rapport à l'hydrogène : 71 %

### 2. Exemples 6 à 9 : (conformes à l'invention)

On a répété les conditions des exemples 1R à 5R excepté pour l'exemple 9 où le poids de catalyseur mis en oeuvre a été de 100 mg.

### Exemple 6 :

Catalyseur : Pd sur BaSO₄ (5 % Pd) de marque ENGELHARD
Température : 25°C
Concentration pondérale en H₂O₂ en fin d'essai : 4,68 %
Sélectivité par rapport à l'hydrogène : 94 %

### Exemple 7 :

Catalyseur : Pd sur BaSO₄ (5 % Pd) de marque ALDRICH
Température : 25°C
Concentration pondérale en H₂O₂ en fin d'essai : 3,36 %
Sélectivité par rapport à l'hydrogène : 98 %

### Exemple 8 :

Catalyseur : Pd sur BaSO₄ (5 % Pd) de marque JOHNSON MATTHEY
Température : 25°C
Concentration pondérale en H₂O₂ en fin d'essai : 4,22 %
Sélectivité par rapport à l'hydrogène : 90 %

### Exemple 9 :

Catalyseur : Pd sur BaSO₄ (2 % Pd) de marque DODUCO
Température : 25°C
Concentration pondérale en H₂O₂ en fin d'essai : 4,8 %
Sélectivité par rapport à l'hydrogène : 88 %

### Exemple 10 : (conforme à l'invention)

### Préparation du catalyseur BaSO₄

Dans un becher de 250 ml on a pesé 6,00 g de BaSO₄ de qualité ppa et de marque JANSSEN, de volume poreux de 0,37 cm³/g, de diamètre moyen de 3 µm et de surface spécifique de 2 m²/g.

Dans un ballon de 100 ml, on a dissous 1 g de PdCl₂ au moyen de 70 ml d'HCl 1 N en chauffant à 60°C. Après dissolution, on a refroidi à 20°C et on a porté la solution à 100 ml au moyen d'HCl 1 N.

Au becher contenant le support, on a ajouté 180 ml d'eau déminéralisée, on a agité au moyen d'un agitateur magnétique, puis on a ajouté 5,71 g d'une solution aqueuse de NaOH à 10 % en poids.

Pour préparer un catalyseur comprenant au moins 1 % de Pd sur le support, on a mis en oeuvre, pour 6 g de support, 0,20 g de PdCl₂. On a en conséquence précipité le Pd en ajoutant lentement à raison de une à deux gouttes par seconde sous forte agitation, 20 ml de la solution mère de PdCl₂ à 0,01 g de PdCl₂/ml et on a vérifié au moyen d'un papier indicateur que le pH était monté jusqu'à une valeur comprise entre 9 et 10.

On a ensuite filtré le précipité formé au moyen d'un filtre de marque SARTORIUS type 11306 47N à ouverture de pore de 0,45 µm, sous le vide d'une trompe à eau, dans un support de filtre de marque MILLIPORE de 47 mm de diamètre. On a lavé ensuite 8 fois avec 50 ml d'eau déminéralisée à 80°C pour éliminer le NaCl.

On a séché le catalyseur obtenu par précipitation en le plaçant sur un verre de montre dans une étuve à 110°C pendant 16 heures sous un vide partiel après quoi le catalyseur a été démotté en douceur au moyen d'un pilon en verre.

On a ensuite procédé à l'activation du catalyseur sec en l'introduisant dans un calcinateur en verre à support fritté que l'on a placé dans un four à 150°C. On a balayé le calcinateur à travers le support fritté au moyen d'un mélange gazeux d'hydrogène et d'azote à environ 10 % d'hydrogène. On a traité pendant 2,5 heures sous un débit de gaz de 20 l/h. On a ensuite laissé refroidir le calcinateur sous courant d'azote jusqu'à une température inférieure à 50°C. et on a conservé le catalyseur dans un flacon scellé sous atmosphère d'azote. On a ainsi obtenu un catalyseur contenant 1,2 % en poids de Pd.

Le catalyseur obtenu a servi à produire du peroxyde d'hydrogène dans les mêmes conditions qu'aux exemples 6 à 9 excepté que l'on a mis en oeuvre 334 mg de catalyseur. Les résultats obtenus ont été les suivants :
Concentration pondérale en H₂O₂ en fin d'essai : 4,8 %
Sélectivité par rapport à l'hydrogène : 80 %

### Exemple 11 : (conforme à l'invention)

On a préparé un catalyseur de Pd supporté sur du BaSO₄ en suivant le mode opératoire décrit dans l'exemple 10 excepté que l'opération de précipitation du Pd sur le support a été réalisée à l'ébullition de la solution sous pression atmosphérique.

On a ainsi obtenu un catalyseur qui contenait 2 % en poids de Pd. Un essai de production de peroxyde d'hydrogène en présence de 200 mg de ce catalyseur, les autres conditions opératoires étant les mêmes qu'aux exemples 6 à 9 a donné les résultats suivants :
Concentration pondérale en H₂O₂ en fin d'essai : 5,9 %
Sélectivité par rapport à l'hydrogène : 84 %

### Exemple 12 : (conforme à l'invention)

On a répété l'exemple 11 en modifiant les conditions opératoires de séchage du catalyseur de manière à lui faire subir une opération de déshydratation supplémentaire de 8 heures sous azote à 300°C avant de l'activer par traitement avec le mélange d'hydrogène et d'azote.

On a obtenu un catalyseur qui contenait 2 % en poids de Pd et qui a donné les résultats de production de peroxyde d'hydrogène suivants (conditions opératoires identiques aux exemples 6 à 9 excepté la quantité de catalyseur fixée à 300 mg) :
Concentration pondérale en H₂O₂ en fin d'essai : 4,5 %
Sélectivité par rapport à l'hydrogène : 85 %

## Revendications

1. Procédé pour la synthèse directe d'une solution aqueuse de peroxyde d'hydrogène à partir d'hydrogène et d'oxygène par catalyse hétérogène dans un système triphasique selon lequel on fait réagir directement l'hydrogène et l'oxygène à l'état gazeux sous une pression supérieure à la pression atmosphérique à la surface d'un catalyseur hétérogène solide mis en suspension à l'état de granules dans une phase aqueuse liquide, le catalyseur étant constitué d'un composé métallique choisi parmi le palladium pur ou une association de palladium avec au moins un autre métal noble, caractérisé en ce que le composé métallique est imprégné sur un support comprenant au moins un composé choisi parmi les sulfates de métaux alcalino-terreux.

2. Procédé selon la revendication 1, caractérisé en ce que le métal alcalino-terreux est choisi parmi le magnésium, le calcium, le strontium et le baryum.

3. Procédé selon la revendication 2, caractérisé en ce que le support est constitué de sulfate de baryum.

4. Procédé selon l'une quelconque des revendications 1 à 3, caractérisé en ce que le catalyseur est constitué de palladium pur imprégné sur un support de sulfate de baryum.

5. Procédé selon l'une quelconque des revendications 3 ou 4, caractérisé en ce que le milieu contient en outre une quantité d'ions SO4⁻⁻ comprise entre 0,001 et 0,2 mole par litre.

6. Procédé selon l'une quelconque des revendications 1 à 5, caractérisé en ce que, dans le catalyseur, la quantité de palladium ou d'association du palladium avec au moins un autre métal noble est comprise entre 0,1 et 15 g par 100 g du poids total de métal et de support et, de préférence, entre 0,2 et 10 g par 100 g de ce poids.

7. Procédé selon l'une quelconque des revendications 1 à 6, caractérisé en ce que le catalyseur se présente sous la forme de petits granules dont le diamètre moyen est compris entre 0,5 et 500 µm et le volume poreux est compris entre 0,01 et 1,5 cm³/g.

8. Procédé selon l'une quelconque des revendications 1 à 7, caractérisé en ce que la phase aqueuse liquide contient des ions bromure en concentration comprise entre 0,05 et 3 mmoles/litre de phase aqueuse et que son pH est situé dans la plage comprise entre 0 et 4.

9. Catalyseur solide pour la production d'une phase aqueuse liquide de peroxyde d'hydrogène par catalyse hétérogène de la réaction de synthèse directe à partir d'hydrogène et d'oxygène gazeux dans un système triphasique, selon lequel le catalyseur est constitué d'un composé métallique choisi parmi le palladium pur ou une association de palladium avec au moins un autre métal noble, caractérisé en ce que le composé métallique est imprégné sur un support comprenant au moins un composé choisi parmi les sulfates de métaux alcalino-terreux.

10. Procédé de préparation du catalyseur selon la revendication 9, caractérisé en ce que, dans une première étape, on dissout un sel soluble de palladium, ou un mélange de sel soluble de palladium avec au moins un sel soluble d'un autre métal noble, dans une solution aqueuse acide, dans une deuxième étape, on ajoute à la solution aqueuse des granules d'un support inorganique insoluble comprenant au moins un composé choisi parmi les sulfates de métaux alcalino-terreux et on précipite le palladium ou l'association de palladium avec au moins un autre métal noble par l'addition goutte à goutte d'une solution aqueuse d'une base forte sous forte agitation jusqu'à ce que le pH du milieu soit compris entre 9 et 10, dans une troisième étape, on filtre ensuite le précipité et on lave à l'eau déminéralisée pour éliminer du précipité les ions solubles, dans une quatrième étape, on sèche le précipité puis on l'active dans un four maintenu à température comprise entre 130 et 300°C sous courant gazeux d'hydrogène mélangé à de l'azote et, dans une cinquième étape, on fait refroidir le catalyseur sous courant d'azote avant de le conserver en flacon scellé sous atmosphère d'azote.

## Claims

1. Method for direct synthesis of an aqueous solution of hydrogen peroxide from hydrogen and oxygen by heterogeneous catalysis in a three-phase system, according to which hydrogen and oxygen are directly reacted in the gaseous state and at a pressure greater than atmospheric pressure, at the surface of a solid heterogeneous catalyst suspended in the granular state in a liquid aqueous phase, the catalyst consisting of a metal compound chosen from pure palladium or a combination of palladium with at least one other noble metal, characterized in that the metal compound is impregnated on a support comprising at least one compound chosen from the sulphates of alkaline-earth metals.

2. Method according to Claim 1, characterized in that the alkaline-earth metal is chosen from magnesium, calcium, strontium and barium.

3. Method according to Claim 2, characterized in that the support consists of barium sulphate.

4. Method according to any one of Claims 1 to 3, characterized in that the catalyst consists of pure palladium impregnated on a barium sulphate support.

5. Method according to either of Claims 3 or 4, characterized in that the mixture furthermore contains a quantity of SO₄⁻⁻ ions between 0.001 and 0.2 mol per litre.

6. Method according to any one of Claims 1 to 5, characterized in that, in the catalyst, the quantity of palladium or of the combination of palladium with at least one other noble metal is between 0.1 and 15 g per 100 g of the total weight of metal and support and, preferably, between 0.2 and 10 g per 100 g of this weight.

7. Method according to any one of Claims 1 to 6, characterized in that the catalyst is in the form of small granules whose mean diameter is between 0.5 and 500 µm and whose pore volume is between 0.01 and 1.5 cm³/g.

8. Method according to any one of Claims 1 to 7, characterized in that the liquid aqueous phase contains bromide ions in a concentration of between 0.05 and 3 mmol/litre of aqueous phase and in that its pH is in the range between 0 and 4.

9. Solid catalyst for the production of a liquid aqueous phase of hydrogen peroxide by heterogeneous catalysis of the direct synthesis reaction from gaseous hydrogen and oxygen in a three-phase system, according to which the catalyst consists of a metal compound chosen from pure palladium or a combination of palladium with at least one other noble metal, characterized in that the metal compound is impregnated on a support comprising at least one compound chosen from the sulphates of alkaline-earth metals.

10. Method of preparation of the catalyst according to Claim 9, characterized in that, in a first step, a soluble palladium salt, or a mixture of a soluble palladium salt with at least one soluble salt of another noble metal, is dissolved in an acidic aqueous solution, in a second step, there is added to the aqueous solution granules of an insoluble inorganic support comprising at least one compound chosen from the sulphates of alkaline-earth metals, and the palladium or the combination of palladium with at least one ether noble metal is precipitated by drop-wise addition of an aqueous solution of a strong base under strong agitation until the pH of the mixture is between 9 and 10, in a third step, the precipitate is then filtered and washed with demineralized water in order to remove the soluble ions from the precipitate, in a fourth step, the precipitate is dried, then it is activated in an oven kept at a temperature between 130 and 300°C under a gaseous flow of hydrogen mixed with nitrogen and, in a fifth step, the catalyst is cooled under a flow of nitrogen before being stored in a sealed bottle under a nitrogen atmosphere.

## Patentansprüche

1. Verfahren zur Direktsynthese einer wäßrigen Wasserstoffperoxid-Lösung ausgehend von Wasserstoff und Sauerstoff durch heterogene Katalyse in einem Drei-Phasen-System, gemäß dem man Wasserstoff und Sauerstoff in gasförmigem Zustand unter einem Druck, der höher als der Atmosphärendruck ist, auf der Oberfläche eines festen heterogenen Katalysators, der im Granulat-Zustand in einer flüssigen wäßrigen Phase suspendiert ist, direkt reagieren läßt, wobei der Katalysator aus einer metallischen Verbindung besteht, die unter reinem Palladium oder einer Palladium-Verbindung mit wenigstens einem anderen Edelmetall ausgewählt ist, dadurch gekennzeichnet, daß die metallische Verbindung auf einem Träger aufgebracht ist, der wenigstens eine aus den Erdalkalimetallsulfaten ausgewählte Verbindung umfaßt.

2. Verfahren gemäß Anspruch 1, dadurch gekennzeichnet, daß das Erdalkalimetall unter Magnesium, Calcium, Strontium und Barium ausgewählt ist.

3. Verfahren gemäß Anspruch 2, dadurch gekennzeichnet, daß der Träger aus Bariumsulfat besteht.

4. Verfahren gemäß irgendeinem der Ansprüche 1 bis 3, dadurch gekennzeichnet, daß der Katalysator aus reinem Palladium besteht, das auf einem Bariumsulfat-Träger aufgebracht ist.

5. Verfahren gemäß irgendeinem der Ansprüche 3 oder 4, dadurch gekennzeichnet, daß das Medium außerdem eine SO₄²⁻-Ionen-Menge enthält, die zwischen 0,001 und 0,2 Mol pro Liter liegt.

6. Verfahren gemäß irgendeinem der Ansprüche 1 bis 5, dadurch gekennzeichnet, daß die Menge an Palladium oder der Palladium-Verbindung mit wenigstens einem anderen Edelmetall im Katalysator zwischen 0,1 und 15 g pro 100 g des Gesamtgewichts von Metall und Träger, und vorzugsweise zwischen 0,2 und 10 g pro 100 g dieses Gewichts beträgt.

7. Verfahren gemäß irgendeinem der Ansprüche 1 bis 6, dadurch gekennzeichnet, daß der Katalysator in Form kleiner Körnchen vorliegt, deren mittlerer Durchmesser zwischen 0,5 und 500 µm liegt und deren Porenvolumen zwischen 0,01 und 1,5 cm³/g beträgt.

8. Verfahren gemäß irgendeinem der Ansprüche 1 bis 7, dadurch gekennzeichnet, daß die flüssige wäßrige Phase Bromidionen in einer Konzentration zwischen 0,05 und 3 mmol/Liter der wäßrigen Phase enthält und daß ihr pH in dem Bereich zwischen 0 und 4 liegt.

9. Fester Katalysator zur Herstellung einer flüssigen wäßrigen Phase von Wasserstoffperoxid durch heterogene Katalyse der Reaktion der Direktsynthese ausgehend von gasförmigem Wasserstoff und Sauerstoff in einem dreiphasigen System, gemäß dem der Katalysator aus einer metallischen Verbindung besteht, die unter Reinpalladium oder einer Verbindung von Palladium mit wenigstens einem anderen Edelmetall augewählt ist, dadurch gekennzeichnet, daß die metallische Verbindung auf einen Träger aufgebracht ist, der wenigstens eine unter den Erdalkalimetallsulfaten ausgewählte Verbindung umfaßt.

10. Verfahren zur Herstellung des Katalysators gemäß Anspruch 9, dadurch gekennzeichnet, daß man in einem ersten Schritt ein lösliches Palladiumsalz oder ein Gemisch aus einem löslichen Palladiumsalz mit wenigstens einem löslichen Salz eines anderen Edelmetalls in einer sauren wäßrigen Lösung auflöst, man in einem zweiten Schritt zu der wäßrigen Lösung das Granulat eines unlöslichen anorganischen Trägers, der wenigstens eine aus den Erdalkalimetallsulfaten ausgewählte Verbindung umfaßt, hinzufügt und das Palladium oder die Palladium-Verbindung mit wenigstens einem anderen Edelmetall durch tropfenweises Hinzugeben einer wäßrigen Lösung einer starken Base unter starkem Rühren, bis der pH im Medium zwischen 9 und 10 liegt, ausfällt, man in einem dritten Schritt dann den Niederschlag filtriert und mit demineralisiertem Wasser wäscht, um die löslichen Ionen von dem Niederschlag zu entfernen, man in einem vierten Schritt den Niederschlag trocknet, ihn danach in einem auf einer Temperatur zwischen 130 und 300 °C gehaltenen Ofen unter Zustrom von gasförmigen, Wasserstoff zugemischt zu Stickstoff aktiviert, und man in einem fünften Schritt den Katalysator unter Zustrom von Stickstoff abkühlen läßt, bevor man ihn in einem verschlossenen Kolben unter Stickstoffatmosphäre aufbewahrt.
